(19) Europäisches Patentamt
European Patent Office
Office européen des brevets

(11) **EP 4 243 336 A1**

(12) **DEMANDE DE BREVET EUROPEEN**

(43) Date de publication:
**13.09.2023  Bulletin 2023/37**

(21) Numéro de dépôt: **23158344.4**

(22) Date de dépôt: **23.02.2023**

(51) Classification Internationale des Brevets (IPC):
*H04L  9/08* (2006.01)

(52) Classification Coopérative des Brevets (CPC):
**H04L 9/0855**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **10.03.2022  FR 2202098**

(71) Demandeur: **THALES
92400 Courbevoie (FR)**

(72) Inventeur: GAYRARD, Jean-Didier
**31100 Toulouse (FR)**

(74) Mandataire: **Atout PI Laplace
Immeuble "Visium"
22, avenue Aristide Briand
94117 Arcueil Cedex (FR)**

(54) **PROCEDE ET DISPOSITIF DE DISTRIBUTION DE CLES SECRETES DANS UNE CONSTELLATION DE SATELLITE**

(57)    Méthode de distribution de clés secrètes sûres pour une constellation (C) de $N > 1$ satellites $S_p$, $p = [1; N]$ à l'aide d'une station de communication (SC), ladite méthode comprenant les étapes suivantes :

A. échanger au moins une clé secrète $K_{ij}$, i, $j \in [1; N]$, i $\neq$ j , entre la station de communication (SC) et un satellite $S_i$ via un canal quantique ($CQ_{SI}$), chaque clé secrète $K_{ij}$ étant destinée à la communication sécurisée du satellite $S_i$ avec un satellite $S_j$ respectif de la constellation, ladite au moins une clé secrète $K_{ij}$ $j \in [1; N]$, i $\neq$ j formant lesdites clés secrètes sures ;

B. pour chaque $j$

B1- échanger une clé secrète de chiffrage $KEK_j$, entre la station de communication (SC) et le satellite $S_j$ via un canal quantique ($CQ_{SJ}$) ;

B2- chiffrer la clé secrète $K_{ij}$ par une méthode de chiffrement qui utilise la clé secrète de chiffrage $KEK_j$, de manière à produire un message crypté $KC_{ij}$ et transmettre par un canal authentifié $CA_j$ de la station de communication (SC) au satellite $S_j$, ledit message crypté $KC_{ij}$.

[Fig.3A]

soit $i \in [1; N], N > 2$

A : Echanger $K_{ij}, j \in [1; N]$, i $\neq$ j via canal $CQ_{SI}$

Pour chaque $j$

B1 : Echanger $KEK_j$ via canal $CQ_{SJ}$

B2 : Produire $KC_{ij}$ avec $K_{ij}$ et $KEK_j$ et transmettre $KC_{ij}$ à $S_j$

station SC

Fig.3A

EP 4 243 336 A1

## Description

Domaine technique :

La présente invention concerne le domaine de la sécurité des technologies de l'information et plus particulièrement le domaine de la distribution de clé par satellites via des canaux quantiques.

Technique antérieure :

Depuis toujours, il existe la nécessité d'échanger, par un canal de communication public, des informations sensibles qui doivent rester secrètes. Supposons que deux personnes, Alice et Bob, souhaitent échanger, au travers d'un canal de communication public authentifié (par exemple internet), des informations sensibles à l'abri des regards indiscrets. Pour cela ils doivent chiffrer leurs messages. Appelons Eve, la personne qui souhaite intercepter ces messages. Alice doit, à l'aide d'une fonction cryptographique publiée (c'est à dire non secrète) et d'une clé secrète, chiffrer ses messages avant de les envoyer à Bob au travers d'un canal public. Lorsque Bob reçoit les messages chiffrés, il doit, à l'aide de la même fonction cryptographique et de la même clé secrète qu'Alice, les déchiffrer pour pouvoir accéder aux informations en clair.

Se pose maintenant le problème de la clé secrète partagée entre Alice et Bob : comment est-elle générée, comment est-elle échangée de façon sécurisée et à l'abri des regards indiscrets ?

Lors des échanges sécurisés sur internet, l'établissement d'une clé secrète partagée est effectué à l'aide de techniques reposant sur la cryptographie à clé publique que nous ne détaillons pas ici. Une nouvelle solution a été imaginée à la fin du XXème siècle. Elle propose d'utiliser un canal quantique qui permet à Alice et à Bob d'établir une clé secrète commune en échangeant des particules quantiques (ex : des photons) sans qu'Eve ne puisse remonter à la clé. Néanmoins, cette technique de distribution des clés par des canaux quantiques (QKD en anglais pour Quantum Key Distribution) souffre de quelques limitations qui rendent difficile son application à un grand nombre d'utilisateurs et sur de très longues distances. Ce qui pourrait, à terme, rendre cette technique peu attractive et donc pas assez rentable pour générer des opportunités industrielles.

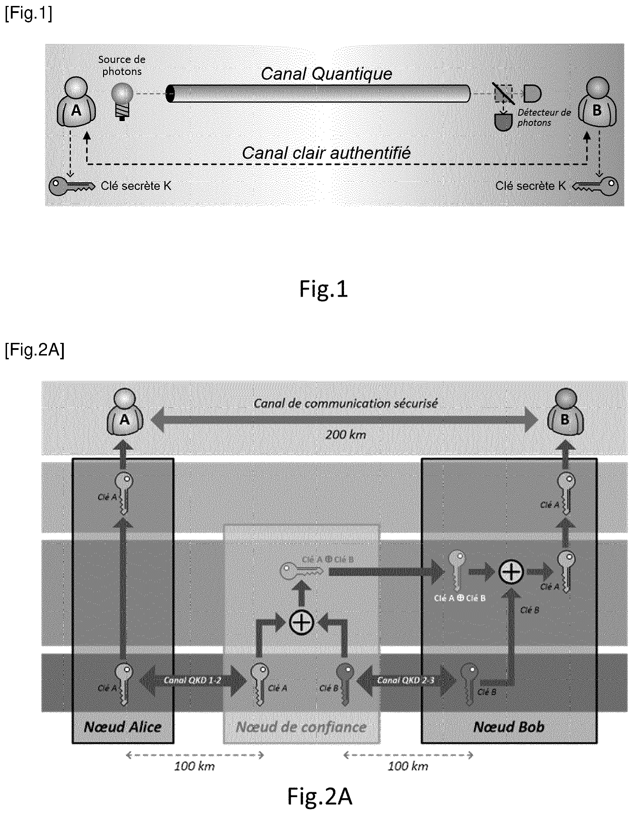

La figure 1 représente schématiquement l'architecture d'un canal quantique qui permet, à deux utilisateurs Alice (l'émetteur du code) et Bob (le récepteur du code), d'établir une clé secrète commune. La clé est une séquence de bits, aléatoires, pouvant donc prendre comme valeur 0 ou 1. Pour transmettre cette clé, Alice encode chaque bit de la clé selon deux modes de polarisation d'un photon préparé par Alice, le choix du mode de polarisation est aléatoire (qbits). Alice note pour chaque bit (donc chaque photon) le mode de polarisation aléatoirement choisi. A l'aide d'un filtre polarisant et d'un détecteur de photons pouvant être orienté alternativement selon deux modes de polarisation choisis aléatoirement, Bob note le résultat de détection (le photon a passé le filtre, ou le photon n'a pas passé le filtre), ainsi que l'orientation choisie du filtre.

Une fois toute la séquence de qbits transmise, Alice envoie à Bob les modes de polarisation employés pour chaque qbit par un canal clair authentifié. Bob peut alors déduire la valeur des bits pour lesquels l'orientation de polarisation a été la même. Il connaît alors avec certitude N bits en moyenne pour 2N bits transmis par Alice, cette séquence étant appelée clé réconciliée.

Enfin, Alice et Bob se mettent d'accord sur un sous-ensemble de la clé réconciliée (étape de réconciliation). Ils comparent alors s'ils ont obtenu les mêmes bits dans ce sous-ensemble : si oui, ils utilisent le reste de la clé pour dériver une clé cryptographique. S'il y a un désaccord, le processus est recommencé. En effet, le théorème de non clonage garantit qu'en cas d'écoute, Eve force le photon sur un mode de polarisation (qui n'est pas forcément celui d'Alice). Alors, si Eve devine correctement le mode d'Alice avec une probabilité de 50 %, alors 25 % des bits de la clé de réconciliation seront en désaccord. De manière générale, en sacrifiant n bits de la clé de réconciliation, Alice et Bob peuvent détecter un éventuel espion sur le canal avec une probabilité de

$$1 - \left(\frac{3}{4}\right)^n.$$

Au niveau des réseaux sols, l'échange de clé (ou plus précisément : l'établissement de clé) par un canal quantique se fait simplement, via un canal de communication optique porté par de la fibre optique. Néanmoins, l'échange de photons polarisés uniques (ou d'impulsions lumineuses de très faible intensité) au travers d'une fibre ne permet pas, à Alice et à Bob, d'échanger ces photons au-delà d'une certaine limite de distance (à ce jour environ 100 km) qui représentent l'asymptote de probabilité d'absorption à 100% des photons par le matériau qui compose la fibre optique.

En conséquence, l'architecture des réseaux de canaux quantiques est fortement impactée par cette contrainte physique. Deux solutions ont été imaginées pour palier à cette limitation de distance.

La première solution envisagée est de propager les clés par des noeuds dits "de confiance" (ou "trusted nodes") placés à intervalles réguliers (tous les 100 kilomètres par exemple). La figure 2A illustre schématiquement un dispositif de génération de clé par noeud de confiance connu de l'art antérieur. Le noeud de confiance manipule en clair la clé établie avec Alice (Clé A) et la clé établie avec Bob (Clé B). Ce noeud de confiance est positionné entre Alice et Bob et permet d'allonger la portée d'établissement de clé par canaux quantiques. Ensuite, le noeud de confiance s'appuie sur la technique du masque jetable pour transmettre cette clé A à Bob. Pour cela, le noeud de confiance effectue un « XOR » (porte logique OU exclusif) entre la clé d'Alice et la clé de Bob. Par « XOR », on entend ici et dans la suite du document le fait de combiner deux clés par la porte logique « ou exclusif » ou « XOR », de symbole ⊕. Le résultat est transmis à Bob par un canal clair authentifié. Bob, qui détient la clé B, pourra de nouveau effectuer un XOR entre la séquence reçue du noeud n°2 et sa clé (Clé B) pour recouvrer la clé d'Alice (Clé A).

Cette première solution repose sur la propriété de la fonction XOR : $A \oplus B \oplus B = A \oplus (B \oplus B)_{=0} = A$ mais aussi sur la technique de chiffrement par masque jetable (OTP en anglais pour One Time Pad cryptography) qui garantit qu'il n'est pas possible de remonter à la clé A et/ou à la clé B par la seule connaissance de la séquence Clé A ⊕ Clé B. La technique du masque jetable repose sur le principe suivant. Tout message qui doit être chiffré le sera par une clé strictement aléatoire, de la taille du message et qui sera combinée au message clair pour aboutir au message chiffré. Le déchiffrement sera effectué en effectuant l'opération inverse sur le message chiffré en utilisant la même clé secrète. Cette technique a été démontré théoriquement sûre par Claude Shannon, et ce, quels que soient les moyens dont dispose l'attaquant à condition de respecter 3 règles absolument fondamentales :

- La clé doit être aussi longue que le message à chiffrer,

- La clé doit être strictement aléatoire, les éléments qui constituent la clé (bits ou caractères) de la clé doivent tous être indépendant les uns des autres.

- Chacune des clés (ou masque) ne doit être utilisée qu'une seule fois pour chiffrer un seul message.

Néanmoins, cette première solution requiert que les noeuds de confiance, qui manipulent les clés en clair, soient sécurisés avec un très fort niveau de sécurité qui implique des surcoûts et des contraintes opérationnelles non négligeables. Ensuite, ce type de solution est difficile, voire impossible, à mettre en place pour interconnecter deux utilisateurs séparés par un océan (difficile et coûteux d'implémenter régulièrement des noeuds de confiance sous l'océan).

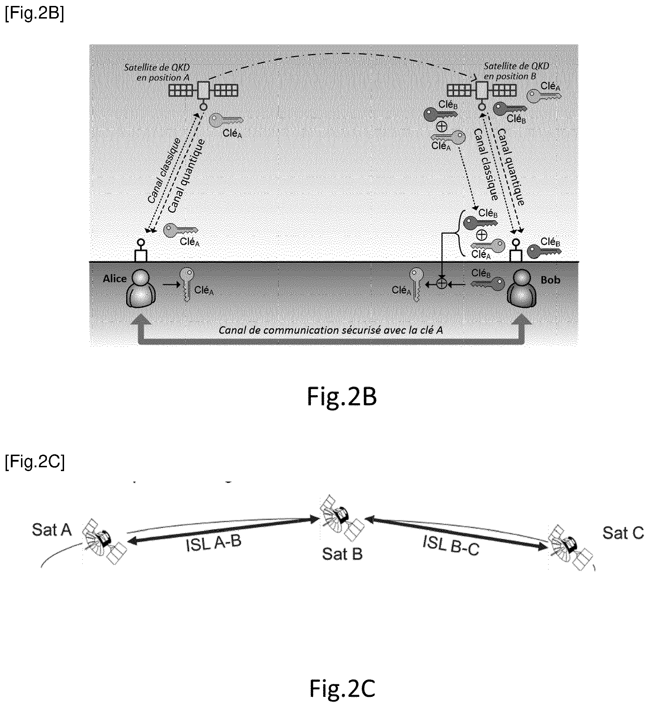

La deuxième solution est de procéder à des échanges de photons en champ libre et donc depuis l'espace. Dans ce cas, la limite de distance de la fibre optique n'est plus applicable et il est possible de distribuer à deux utilisateurs localisés n'importe où sur terre des clés de chiffrement par l'intermédiaire de canaux QKD depuis l'espace. Cette configuration est illustrée dans la figure 2B. Dans ce cas, c'est le satellite qui fait office de noeud de confiance puisqu'il va établir une clé A avec Alice et une clé B avec Bob pour ensuite transmettre à Bob la clé A ⊕ clé B sur un canal de communication classique clair et authentifié. Au sol, Bob, détenteur de la clé B, sera capable d'extraire la clé A d'Alice en effectuant un XOR de la clé B avec la séquence Clé A ⊕ Clé B que le satellite lui aura redescendu. Ici, le satellite, s'il est en orbite basse se déplace relativement à Alice et relativement à Bob. Donc, quelle que soit la distance qui sépare Alice et Bob, le satellite agit comme un noeud de confiance mobile capable d'établir la Clé A et la Clé B et de distribuer la combinaison Clé A ⊕ Clé B qui permettent à Alice et à Bob de partager une clé secrète commune (Clé A).

Cependant, cette deuxième solution fonctionne avec un seul satellite. Or, il peut être nécessaire de sécuriser les liaisons inter-satellites (ou ISL ou « inter-satellite link » en anglais) radiofréquence (RF) ou optique dans une constellation de satellites. Par « constellation de satellites », on entend ici une pluralité de satellites coordonnés et travaillant de concert échangeant des informations entre eux et/ou via un station de contrôle. En effet, ces liaisons sont vulnérables à l'écoute et l'interception des messages numériques véhiculés entre deux satellites par ces ISL (en particulier les ISL intra-plan orbital). Un satellite « espion » sur la même orbite et placé entre deux satellites de la constellation peut écouter les signaux échangés entre ces deux satellites par ladite liaison inter-satellite.

Les solutions connues pour l'échange des clés secrètes entre les satellites sont:

- Enregistrer avant le lancement des satellites une base de données de clés sécrètes qui seront utilisées durant la vie du satellite. Cette solution requiert cependant un très grand volume de clé à stocker et implique un risque de compromission des clés durant la vie du satellite.

- Echanger les clés secrètes entre deux satellites voisins en utilisant la liaison inter-satellite et propager de proche en proche toutes les clés secrètes par QKD. Cependant, cette méthode nécessite la distribution de proche en proche. Il y a donc l'inconvénient que chaque satellite faisant office de relais doit être un noeud de confiance pour l'échange de clés entre les deux satellites. La figure 2C illustre cet exemple, avec trois satellites A, B et C formant une constellation, le satellite B faisant office de noeud de confiance pour propager les clés secrètes entre A et C par les liaisons ISL A-B et ISL B-C.

L'invention vise à pallier certains problèmes de l'art antérieur. A cet effet, un objet de l'invention est un système et une méthode de distribution de clés secrètes sûres pour une constellation de $N > 1$ satellites à l'aide d'une station de communication. A la différence des méthodes de l'art antérieur, une seule station de communication est utilisée pour échanger des clés secrètes sûres avec un satellite, chacune des clés secrètes sûres étant destinée à la communication sécurisée du satellite avec un autre satellite respectif de la constellation. L'établissement des clés secrètes sûres est réalisée par QKD afin de rendre la solution de l'invention inconditionnellement sûre.

Résumé de l'invention :

A cet effet, un méthode de distribution de clés secrètes sûres pour une constellation de $N > 1$ satellites $S_p, p = [1; N]$ à l'aide d'une station de communication, ladite méthode comprenant les étapes suivantes :

- échanger au moins une clé secrète $K_{ij}$, i,$j \in [1; N]$,i $\neq$ j , entre la station de communication et un satellite $S_i$ via un canal quantique, chaque clé secrète $K_{ij}$ étant destinée à la communication sécurisée du satellite $S_i$ avec un satellite $S_j$ respectif de la constellation, ladite au moins une clé secrète $K_{ij}$ formant lesdites clés secrètes sures ; pour chaque j

  B1- échanger une clé secrète de chiffrage $KEK_j$, entre la station de communication et le satellite $S_j$ via un canal quantique;

  B2- chiffrer la clé secrète $K_{ij}$ par une méthode de chiffrement qui utilise la clé secrète de chiffrage $KEK_j$ de manière à produire un message crypté $KC_{ij}$ et transmettre ledit message crypté $KC_{ij}$ par un canal authentifié $CA_j$ de la station de communication au satellite $S_j$.

Selon un mode de réalisation préférée, la méthode de l'invention comprend une étape ultérieure C, consistant à :

- déchiffrer, dans chaque satellite $S_j$, le message crypté $KC_{ij}$ à l'aide de la clé secrète de chiffrage $KEK_j$ associée au satellite $S_j$, de manière à obtenir la clé secrète $K_{ij}$ destinée à la communication sécurisée du satellite $S_i$ avec le satellite $S_j$ respectif.

De manière préférentielle, dans laquelle ladite méthode de chiffrement est la méthode du masque jetable et dans laquelle chaque clé secrète sûre, chaque clé secrète de chiffrage, et chaque message cryptés sont codées en binaire, la génération de chaque message crypté $KC_{ij}$ étant réalisée par la porte logique XOR combinant, la clé secrète de chiffrage $KEK_j$ et la clé secrète $K_{ij}$, le déchiffrement de chaque message crypté $KC_{ij}$ étant réalisé par la porte logique XOR combinant le message crypté $KC_{ij}$ et la secrète de chiffrage $KEK_j$.

Selon un mode de réalisation préféré, la méthode de l'invention comprend une étape ultérieure D, consistant à chiffrer, dans le satellite $S_i$, un message non aléatoire à l'aide d'une clé sécrète sûre $K_{ij}$ puis à transmettre le message non aléatoire chiffrée vers dans le satellite $S_j$, et comprenant une étape ultérieure E, consistant à déchiffrer ledit message non aléatoire chiffré à l'aide de la clé secrète sûre $K_{ij}$.

Selon un mode de réalisation préféré, les étapes A, B2, et C sont répétées $z \in \mathbb{N} > 1$ fois avec un même $i \in [1; N]$, afin de former $z$ jeux de clé(s) secrète(s) sûre(s) $K_{ij,z}$, chacun destiné à sécuriser une communication du satellite $S_i$ avec la ou les satellites $S_j$. De manière préférentielle, $z$ est inférieur à un nombre dit critique calculé à partir d'une crypto-période des clés secrètes de chiffrage $KEK_j$.

Selon un mode de réalisation préféré, les étapes A, B2, et C sont répétées $z \in \mathbb{N} > 1$ fois en variant $i$ à chaque itération tel que $i(z) \in [1; N]$, afin de former une pluralité de jeux de clé(s) secrète(s) sûre(s) $K_{i(z)j}$, chacun destiné à sécuriser une communication d'un satellite $S_{i(z)}$ avec la ou les satellites $S_j$.

Selon un mode de réalisation de l'invention, l'étape A requiert une sous étape de réconciliation via un canal de réconciliation reliant ladite station de communication et le satellite $S_i$, et chaque étape B1 requiert une sous étape de réconciliation via un canal de réconciliation reliant ladite station de communication et le satellite $S_j$ respectif. De manière préférentielle, chaque canal de réconciliation est aussi une liaison bidirectionnelle de télémesure/télécommande du satellite respectivement relié par ce canal. De manière préférentielle, au moins un canal de réconciliation est relayée par au moins un satellite de la constellation via des liaisons inter-satellites. De manière préférentielle, dans laquelle chaque canal authentifié $CA_j$ est un canal de réconciliation reliant ladite station de communication et le satellite $S_j$ respectif. De manière préférentielle, chaque canal de réconciliation est aussi une liaison bidirectionnelle de télémesure/télécommande du satellite respectivement reliés par ce canal.

Un autre objet de l'invention est une station de communication de distribution de clés secrètes sûres pour une constellation de $N > 1$ satellites $S_p, p = [1; N]$, ladite station de communication étant adaptée pour échanger au moins une clé secrète $K_{ij}$, i, $j \in [1; N]$ ,i $\neq$ j via un canal de quantique entre le satellite $S_i$ et ladite station de communication, chaque clé secrète $K_{ij}$ étant destinée à la communication sécurisée du satellite $S_i$ avec un satellite $S_j$ respectif de la constellation, ladite au moins une clé secrète $K_{ij}$,$j \in [1; N]$, i $\neq$ j formant lesdites clés secrètes sures, ladite station de communication étant adaptée pour :
pour chaque $j$ :

- échanger une clé secrète de chiffrage $KEK_j$ via un canal de cryptage entre le satellite $S_j$ et ladite station de communication ;

- chiffrer la clé secrète $K_{ij}$ par une méthode de chiffrement qui utilise la clé secrète de chiffrage $KEK_j$ de manière à produire un message crypté $KC_{ij}$ et transmettre par un canal authentifié $CA_j$ de la station de communication au satellite $S_j$, ledit message crypté $KC_{ij}$.

Un autre objet de l'invention est un système comprenant la station de communication selon la revendication précédente et comprenant les $N$ satellites, chaque satellite $S_j$ étant adapté pour déchiffrer, le message crypté $KC_{ij}$ à l'aide de la clé secrète de chiffrage $KEK_j$ associée au satellite $S_j$ de manière à obtenir dans le satellite $S_j$ la clé secrète $K_{ij}$ destinée à la communication sécurisée du satellite $S_i$ avec le satellite $S_j$. De manière préférentielle, la station de communication est embarquée sur un satellite additionnel en orbite autour de la terre, ledit satellite additionnel étant différent des satellites de la constellation. De manière préférentielle, le satellite additionnel est sur une orbite dont une altitude est supérieure à celle d'une orbite des satellites de la constellation.

Brève description des figures :

D'autres caractéristiques, détails et avantages de l'invention ressortiront à la lecture de la description faite en référence aux dessins annexés donnés à titre d'exemple et qui représentent, respectivement :

[Fig.1] une vue schématique d'un dispositif de QKD selon l'art antérieur,

[Fig.2A], une vue schématique d'un dispositif de génération de clé par noeud de confiance de l'art antérieur,

[Fig.2B], une vue schématique d'un dispositif de génération de clé par QKD par satellite de l'art antérieur,

[Fig.2C], une vue schématique d'un dispositif de génération de clé par satellite en tant que noeud de confiance de l'art antérieur,

[Fig.3A], une vue schématique d'un système de distribution de clés secrètes selon l'invention,

[Fig.3B], une vue schématique d'une méthode de génération de clés secrètes sûres selon l'invention,

[Fig.3C], une vue schématique d'une méthode de génération d'une clé secrète sûre selon un mode de réalisation préféré de la méthode de l'invention

[Fig.4], une vue schématique d'une méthode de génération d'une clé secrète sûre selon un mode de réalisation préféré de la méthode de l'invention

[Fig.5A], une vue schématique d'un système de distribution de clés secrètes selon un mode de réalisation de l'invention,

[Fig.5B], une vue schématique d'un système de distribution de clés secrètes selon un mode de réalisation de l'invention,

[Fig.5C], une vue schématique d'un système de distribution de clés secrètes selon un mode de réalisation de l'invention,

Dans les figures, sauf contre-indication, les éléments ne sont pas à l'échelle.

Description détaillée :

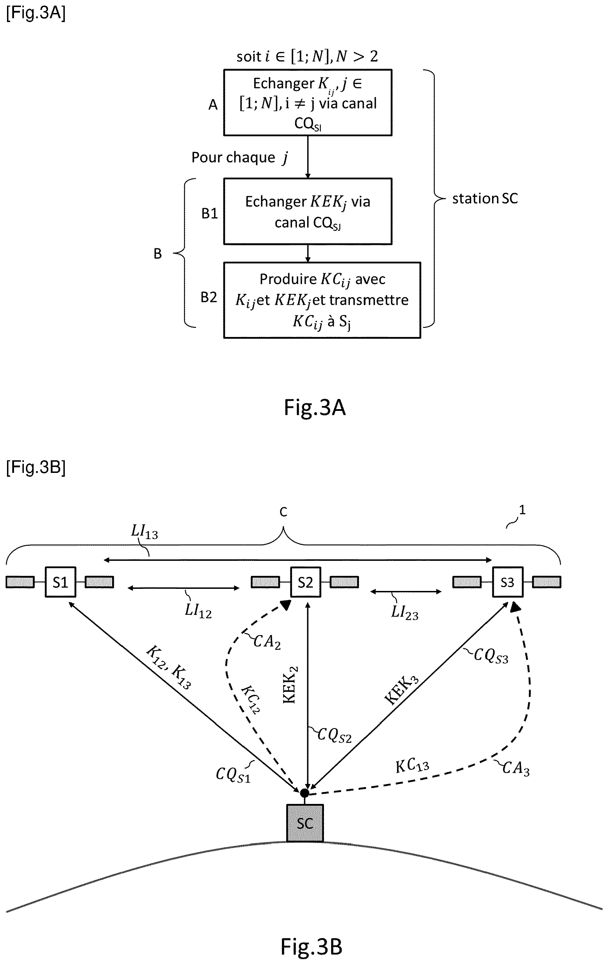

La figure 3A illustre schématiquement une méthode de distribution de clés secrètes sûres pour une constellation C de $N > 1$ satellites selon l'invention. La méthode de l'invention est particulièrement adaptée pour être mise en oeuvre par une station de communication SC comprise dans un système 1 de l'invention, illustré en figure 3B. Le système 1 comprend en outre les $N$ satellites de la constellation C, noté $S_p, p = [1; N]$.

Comme cela sera expliqué plus loin, le système 1 est adapté pour distribuer une ou plusieurs clés secrètes sûres pour la communication sécurisée entre les satellites de la constellation. A titre d'exemple non limitatif, la figure 3B illustre un mode de réalisation dans lequel le système 1 comprend trois satellites $S_1, S_2$ et $S_3$. Alternativement, selon un autre mode de réalisation, la constellation C du système de l'invention comprend deux ou plus de trois satellites.

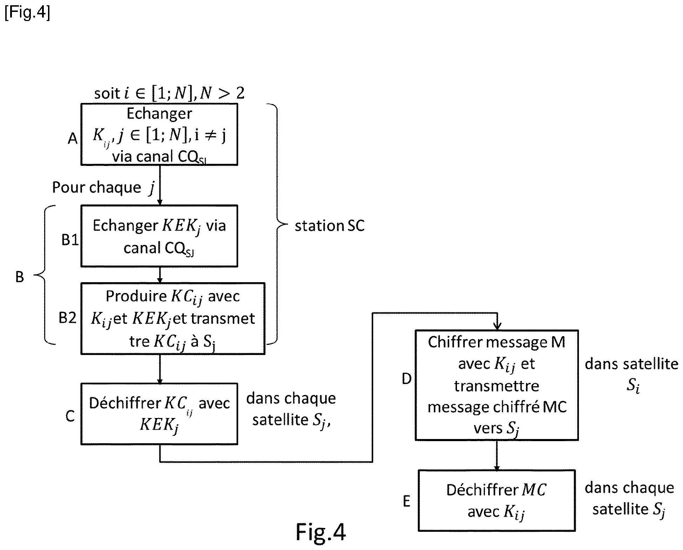

Dans une première étape A de la méthode de l'invention, au moins une clé secrète $K_{ij}$, i,$j \in [1; N]$, i $\neq$ j est échangée via un canal quantique $CQ_{SI}$ entre la station de communication SC et un satellite $S_i$, aussi appelé satellite d'initiation. La ou les clés secrètes $K_{ij}$ sont stockées dans la station SC et dans le satellite $S_i$. Dans l'invention, l'émission des qbits peut se faire indifféremment du satellite d'initiation $S_i$ vers la station SC ou de la station SC vers le satellite d'initiation $S_i$. Chaque clé secrète $K_{ij}$ est destinée à la communication sécurisée du satellite d'initiation $S_i$ avec un satellite $S_j$ respectif de la constellation (voir figure 4). Autrement dit, ces clés secrètes sont utilisées pour chiffrer les liaisons inter-satellites du satellite $S_i$ (représentées en figure 3A par la référence $LI_{12}$ pour la liaison entre $S_1$ et $S_2$ et la référence $LI_{13}$ pour la liaison entre $S_1$ et $S_3$).

La méthode de l'invention comprend une étape B qui comprend elle-même deux sous étapes, mises en oeuvre pour chaque j. Dans l'étape B1, une clé secrète de chiffrage $KEK_j$ est échangée entre la station de communication SC et le satellite $S_j$ respectif via un canal quantique $CQ_{SJ}$. Comme pour l'étape A, dans l'étape B, l'émission des qbits peut se faire indifféremment du satellite $S_j$ vers la station SC ou de la station SC vers le satellite $S_j$. Dans l'étape B2, la station SC chiffre la clé secrète $K_{ij}$ par une méthode de chiffrement qui utilise la clé secrète de chiffrage $KEK_j$, de manière à produire un message crypté $KC_{ij}$. De plus, l'étape B2 comprend la transmission du message crypté $KC_{ij}$ par un canal authentifié $CA_j$ de la station de communication SC au

satellite $S_j$. Les étapes B1 et B2 sont répétées pour chaque $j$ de sorte que chaque clé secrète $K_{ij}$ soit transmise au satellite $S_j$ sous la forme du message crypté $KC_{ij}$. Selon l'invention, la méthode de chiffrement de l'étape B2 peut être toute méthode connue de l'homme de l'art. Par exemple, la méthode est une méthode de chiffrement symétrique par bloc ou par flot connue de l'homme de l'art par exemple la méthode du masque jetable ou la méthode AES (pour *Advanced Encryption Standard* en anglais) ou encore la méthode Triple DES.

En se référant au mode de réalisation illustré en figure 3B, à titre d'exemple on a $i = 1$ et $j = 2, 3$. Aussi, en étape A, deux clés secrètes $K_{12}$ et $K_{13}$ sont échangées entre la station SC et le satellite d'initiation $S_i$ par le canal quantique $CQ_{S1}$. Pendant l'étape B, pour $j = 2$, la clé secrète de chiffrage $KEK_2$ est échangée avec la station SC et le satellite $S_2$ par le canal quantique $CQ_{S2}$ (étape B1). Puis, en étape B2, le message crypté $KC_{12}$ est généré par une méthode de chiffrement chiffrant $K_{12}$ et utilisant la clé secrète de chiffrage $KEK_2$, le message crypté $KC_{12}$ étant alors transmis par le canal authentifié $CA_2$ de la station de communication SC au satellite $S_2$. De même, pendant l'étape B, pour $j = 3$, la clé secrète de chiffrage $KEK_3$ est échangée avec la station SC et le satellite $S_3$ par le canal quantique $CQ_{S3}$ (étape B1). En étape B2, le message crypté $KC_{13}$ est alors généré par une méthode de chiffrement chiffrant $K_{13}$ et utilisant la clé secrète de chiffrage $KEK_3$, puis le message crypté $KC_{13}$ est transmis par le canal authentifié $CA_3$ de la station de communication SC au satellite $S_3$.

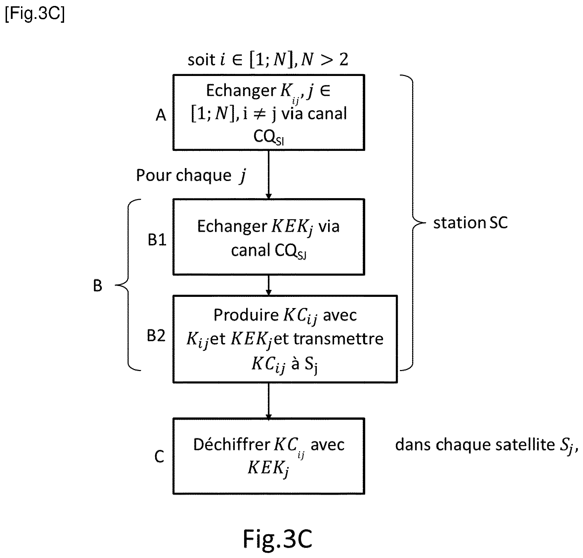

La ou les clés secrètes $K_{ij}$ forment les clés secrètes sures. En effet, à l'issue de la méthode la figure 3A, chaque satellite $S_j$ à la capacité de déchiffrer le message crypté $KC_{ij}$ avec la clé de chiffrage $KEK_j$ échangée avec la station SC par QKD, de manière à obtenir la clé secrète chiffrée $K_{ij}$ (voir méthode de la figure 3C) qui est aussi stockée dans le satellite d'initiation $S_i$. Or, les étapes mises en oeuvre dans la méthode de l'invention étant résistantes à la menace quantique, la méthode de l'invention permet de fournir une pluralité de clés secrètes sûres pour le chiffrage des communications ISL.

On note que toutes les étapes de la méthode de la figure 3A sont mises en oeuvre par la station SC et sont donc « localisées » en une même zone géographique, au lieu d'être distribuée sur différentes stations espacées de plusieurs centaines ou milliers de kilomètres.

La figure 3C illustre un mode de réalisation préféré de la méthode de l'invention. Cette méthode est particulièrement adaptée pour être mise en oeuvre par le système 1 de la figure 3B comprenant les satellites et la station SC. La méthode de la figure 3C comprend une étape C, ultérieure à l'étape B, et mise en oeuvre par chaque satellite $S_j$ auquel un message chiffré $KC_j$ a été transmis (c'est-à-dire le satellite $S_2$ et le satellite $S_3$ dans le mode de réalisation de la figure 3B). Cette étape C consiste à déchiffrer, dans chaque satellite $S_j$, le message crypté $KC_{ij}$ à l'aide de la clé secrète de chiffrage $KEK_j$

associée au satellite $S_j$, de manière à obtenir la clé secrète $K_{ij}$.

Cette étape C est nécessaire afin que les satellites $S_j$ bénéficient chacun d'une clé secrète sûre $K_{ij}$ respective qu'ils pourront ultérieurement utiliser pour chiffrer des messages non aléatoires qu'ils souhaitent échanger avec le satellite d'initiation $S_i$. Ainsi, la méthode de la figure 3C permet de facilement distribuer de manière sûre et inviolable -même par attaque quantique- des clés secrètes sûres $K_{ij}$ pour chiffrer les communications ISL du satellite $S_i$ de la constellation C.

En se référant au mode de réalisation de la figure 3B, l'étape C méthode de la figure 3C consiste à déchiffrer le message $KC_{12}$ avec la clé de chiffrage $KEK_2$ dans le satellite $S_2$ de manière à obtenir la clé secrète sûre $K_{12}$ et à déchiffrer le message $KC_{13}$ avec la clé de chiffrage $KEK_3$ dans le satellite $S_3$ de manière à obtenir la clé secrète sûre $K_{13}$.

Dans l'invention, les étapes d'échange de clé secrète par canal quantique peuvent être réalisées par tout protocole QKD connu de l'homme de l'art.

Rappelons ici qu'une couverture nuageuse au-dessus d'une station de communication terrestre bloque toute liaison optique en espace libre dans le visible et le proche infra-rouge. De plus, le soleil génère de grandes quantités de photons parasites par diffraction dans l'atmosphère (irradiance indirecte) qui dégradent fortement la détection des qbits pouvant mener à la rupture de la liaison. Ainsi, l'état actuel de l'art de la QKD par satellite permet la transmission de qbit par la liaison optique en proche infra-rouge à travers l'atmosphère que pendant la nuit et en ciel clair. Ainsi la disponibilité du canal quantique entre un satellite et un station de communication terrestre est dépendante des événements et aléas météorologiques au-dessus de la station.

Selon un mode de réalisation, la station de communication SC est une station terrestre. La station de communication SC est le seul noeud de confiance du système 1, elle connait et stocke toutes les clés Kij, KEKi,... Dans un système cryptographique, un noeud de confiance est une entité qui est amenée à connaitre et stocker des clés secrètes en clair. L'avantage de placer la station de communication sur terre est que celle-ci est périodiquement en visibilité de chacun des satellites $S_i$ de la constellation. La durée et la répétition des périodes de visibilité des satellites dépend de la position géographique de la station et des caractéristiques des orbites des satellites. Ainsi une seule station de communication terrestre bien positionnée suffit à distribuer les clés secrètes à tout type de constellations.

Alternativement, selon un autre mode de réalisation, la station de communication SC est embarquée sur un satellite en orbite autour de la terre, différent des satellites de la constellation C. En particulier, si ce satellite hébergeant la station de communication est sur une orbite dont l'altitude est supérieure à celle des satellites de la constellation C, les durées de visibilité de chacun des satellites de la constellation sont accrues, augmentant ainsi la durée des périodes de mise en oeuvre du procédé et la fréquence de répétition de ces périodes. Il s'agit par exemple les orbites MEO (pour Medium Earth Orbit en anglais) aux altitudes supérieures à 8000 km ou de l'orbite GEO (pour Geosynchrouous Earth Orbit en anglais) à 36000 km d'altitude. Accroître la fréquence et la durée des périodes de distribution des clés par le procédé de l'invention permet d'augmenter le volume de clés distribuées et de réduire le temps de réaction du procédé (temps entre une demande ou la création d'une clé et l'obtention de celle-ci). Un autre avantage de ce mode de réalisation est que les liaisons optiques (canal quantique) entre le satellite hébergeant la station de communication et les satellites de la constellation C sont en dehors de l'atmosphère. Ces liaisons ne subissent donc pas les aléas météorologiques (couverture nuageuse par exemple) et sont donc disponibles en permanence.

Dans la suite de la description, pour simplifier, on considère que la méthode de l'invention distribue plusieurs clés secrètes sûres $K_{ij}$, c'est-à-dire que plusieurs clés secrètes $K_{ij}$ sont échangées en étape A afin de sécuriser la communication du satellite $S_i$ avec plusieurs satellites $S_j$. Il est entendu que les modes de réalisation décrits par la suite s'appliquent aussi au cas où une seule clé secrète sûre $K_{ij}$ est distribuée.

Dans un mode de réalisation préféré de l'invention, la méthode de chiffrement est la méthode du masque jetable. Dans ce mode de réalisation, de manière préférentielle, chaque clé secrète $K_{ij}$, chaque clé secrète de chiffrage $KEK_j$ et chaque message crypté $KC_{ij}$ sont codées en binaire. Ainsi, la génération de chaque message crypté $KC_{ij}$ est réalisée par la porte logique XOR combinant la clé secrète de chiffrage $KEK_j$ et la clé secrète $K_{ij}$. De même, le déchiffrement de chaque message crypté $KC_{ij}$ est réalisé par la porte logique XOR combinant le message crypté $KC_{ij}$ et la secrète de chiffrage $KEK_j$. Afin d'assurer la sureté de la technique du masque jetable, dans l'invention, pour chaque $j$, la clé secrète de chiffrage $KEK_j$ et la clé secrète $K_{ij}$ sont de même longueur (*key size* en anglais). De manière plus générale, dans l'invention, toutes les étapes mettant en oeuvre la technique du masque jetable combinent deux clés qui sont de même longueur.

La figure 4 illustre une méthode selon un mode de réalisation préféré de la méthode de la figure 3C permettant d'échanger de manière sécurisée un message non aléatoire M entre le satellite $S_i$ et un satellite $S_j$ ayant obtenu la clé secrète sûre $K_{ij}$. La méthode de la figure 4 comprend deux étapes supplémentaires D et E. Dans l'étape D, le satellite $S_i$ chiffre le message non aléatoire M à l'aide d'une clé sécrète sûre $K_{ij}$ puis transmet le message non aléatoire chiffrée MC vers le satellite $S_j$ ayant obtenu la clé secrète sûre $K_{ij}$. Le message chiffré MC est alors transmis par la liaison ISL reliant le satellite $S_i$ et le satellite $S_j$. Cette liaison ISL peut être indifféremment une liaison optique ou une liaison RF ou encore toute autre gamme spectrale adaptée pour effectuer des transmissions inter satellites en espace libre. Dans l'étape E, le

satellite $S_j$ déchiffre le message non aléatoire chiffré à l'aide de la clé secrète sûre $K_{ij}$ et obtient ainsi le message M. Dans la méthode de la figure 4, le chiffrement du message aléatoire est réalisé par une méthode de chiffrement symétrique connue de l'homme de l'art, par exemple celles citées pour l'étape B2. Alternativement, selon un autre mode de réalisation, le message est échangé depuis le satellite $S_j$ jusqu'au satellite $S_i$.

On note que le fait que chaque clé $KC_{ij}$ soit un message aléatoire permet donc au satellite $S_j$ de chiffrer en étape B2 une pluralité de clés secrètes sûres $K_{ij}$ différentes les unes des autres tout en utilisant la même clé de chiffrage $KEK_j$ et sans compromettre la sécurité du chiffrement.

Aussi, selon un mode de réalisation M1 de l'invention, les étapes A, B2, et C sont répétées une pluralité de $z$ fois ( $z \in \mathbb{N}$ ) avec un même $i$ afin de former $z$ jeux de clés secrètes sûres $K_{ij,z}$, chacun destiné à sécuriser une communication du satellite $S_i$ avec les satellites $S_j$. Pour chaque $j$, les clés secrètes sûres $K_{ij,z}$ des $z$ jeux sont transmises avec la même clé secrète de cryptage $KEK_j$. Afin d'éviter une compromission des clés secrètes sûres $K_{ij,z}$ lors de leur chiffrage par chaque clé de chiffrage $KEK_j$, de manière préférentielle, $z$ est inférieur à un nombre dit critique calculé à partir d'une crypto-période des clés secrètes de chiffrage $KEK_j$. On appelle ici « crypto-période », le nombre d'utilisations d'une clé dans un algorithme de chiffrement qui ne doit pas être dépassé afin de garantir la sécurité du message crypté par cette clé.

Selon un autre mode de réalisation M2 de l'invention, qui peut être combiné avec le mode de réalisation M1, la méthode de l'invention est répétée en changeant de satellite $S_i$ à chaque itération tout en utilisant la même clé de chiffrage $KEK_j$ sans compromettre la sécurité du chiffrement. Plus précisément, dans le mode de réalisation M2, les étapes A, B2, et C sont répétées $z \in \mathbb{N} > 1$ fois en variant $i$ à chaque itération. On a donc $i(z) \in [1; N]$. A la fin de la méthode du mode de réalisation M2, on obtient une pluralité de jeux de clés secrètes sûres $K_{i(z)j}$, chacun destiné à sécuriser une communication d'un satellite $S_{i(z)}$ avec les satellites $S_j$.

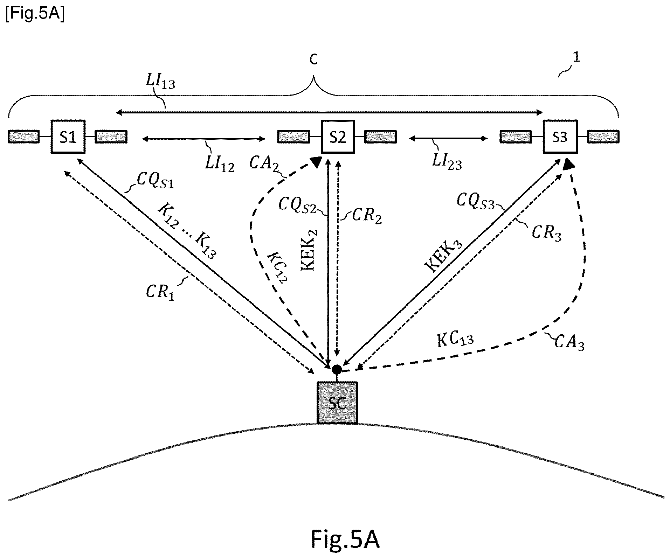

La figure 5A illustre schématique un système 1 selon un mode de réalisation de l'invention. Le système de la figure 5A est adapté pour mettre en oeuvre un mode de réalisation de la méthode de l'invention, compatible avec tous les modes de réalisation précédemment évoqués. Selon ce mode de réalisation, l'étape A requiert une sous étape de réconciliation via un canal de réconciliation $CR_i$ reliant la station de communication SC et le satellite $S_i$. De même, chaque étape B1 requiert une sous étape de réconciliation via un canal de réconciliation $CR_j$ reliant ladite station de communication et le satellite $S_j$ respectif. Comme évoqué précédemment, une étape de réconciliation consiste en la sélection d'un sous ensemble de la clé réconciliée par les deux terminaux qui échangent une clé par QKD. Dans la figure 5A, ces canaux de réconciliation sont représentés par les références $CR_1$, $CR_2$ et $CR_3$ pour la réconciliation entre la station de communication SC et les satellites $S_1$, $S_2$ et $S_3$ respectivement.

Dans le mode de réalisation de la figure 5A, au moins un canal de réconciliation est aussi une liaison bidirectionnelle de télémesure/télécommande du satellite respectivement relié par ce canal, par exemple le canal $CR_1$ du satellite $S_1$. Ce mode de réalisation permet de simplifier l'architecture du réseau en mutualisant certaines des liaisons nécessaire à son fonctionnement. De plus, ce mode de réalisation réduit le matériel à bord du satellite nécessaire pour la mise en oeuvre du procédé selon l'invention. On appelle ici « liaison bidirectionnelle de télémesure/télécommande du satellite » une liaison permettant d'une part le contrôle, la mise en configuration et la programmation de la mission du satellite et d'autre part la mesure de la configuration et de l'état du satellite. Alternativement, selon un autre mode de réalisation, chaque canal de réconciliation est aussi une liaison bidirectionnelle de télémesure/télécommande du satellite respectivement relié par ce canal. Ceci permet de grandement simplifier l'architecture réseau.

Alternativement, selon un mode de réalisation différent de celui illustré en figure 5A, la station SC et la station de télémesure/télécommande du ou des satellites $S_i$ ne sont pas colocalisées. Dans ce cas, le ou les canaux de réconciliation $CR_i$ utilisent des réseaux de communication terrestres reliant la station SC et la station la station de télémesure/télécommande afin permettre la réconciliation entre le satellite $S_i$ et la station SC.

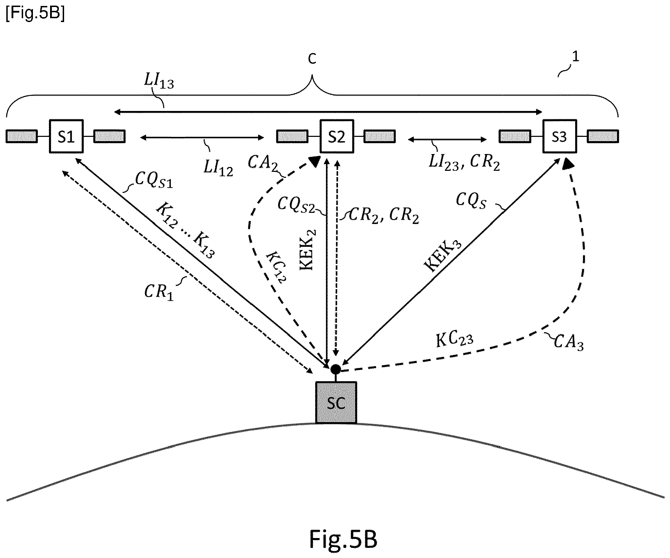

La figure 5B illustre une variante du mode de réalisation du système 1 de la figure 5A. Dans cette variante, un ou plusieurs canaux de réconciliation sont chacun relayées par au moins un satellite de la constellation via des liaisons inter-satellite.. Aussi par exemple, dans la méthode mise en oeuvre par le système de la figure 5B, l'étape B1 comprend les sous étapes suivantes :

- le satellite $S_3$ , pendant son survol de la station SC, transmet la séquence de qbits à la station SC pour l'échange de la clé $KEK_{13}$, et les mémorise. La station SC détecte les qbits et mémorise cette séquence, puis

- la station SC échange les données de réconciliation avec le satellite $S_3$ via la liaison inter-satellite $LI_{23}$ pendant le survol du satellite $S_2$ afin de procéder à la réconciliation entre les séquences de qbit mémorisées par le satellite $S_3$ et la station de communication SC (sous étape de réconciliation).

Ainsi, ce mode réalisation permet de décorréler temporellement l'étape d'échange de qbits et l'étape de réconciliation. Un des avantages est de consacrer toute la durée de survol du satellite S3 à l'échange de qbit, la réconciliation se faisant ultérieurement lors du survol d'autres satellites de la constellation et donc de maximiser le volume de clé créer avec le satellite S3. Ceci est particulièrement intéressant car la liaison optique en espace libre utilisée pour la transmission des qbits ne fonctionne en l'état actuel de la technique de QKD par satellite que pendant la nuit et en ciel clair. La liaison bidirectionnelle de télémesure/ télécommande opérant en radiofréquence n'a pas ces limitations et dispose d'une grande disponibilité.

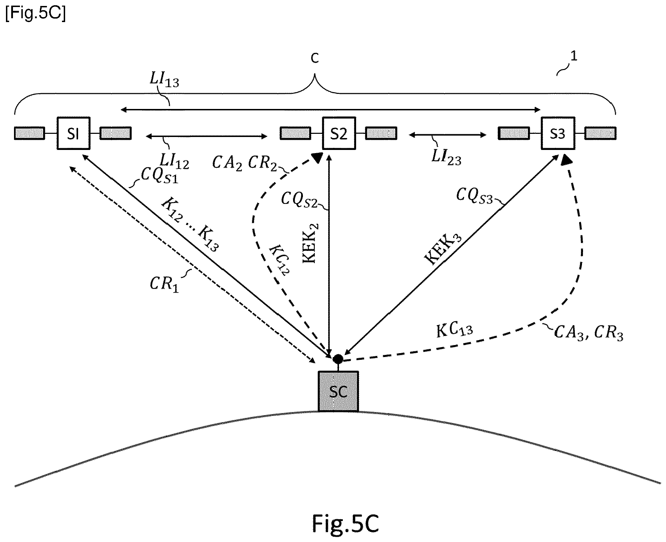

La figure 5C représente schématiquement une variante du mode de réalisation de la figure 5A. Dans cette variante, au moins un canal authentifié $CA_j$ est un canal de réconciliation reliant la station de communication SC et le satellite $S_j$ respectif. Ce mode de réalisation permet de simplifier l'architecture du réseau en mutualisant certaines des liaisons nécessaire à son fonctionnement. A titre d'exemple illustratif, dans la figure 5C ce sont les canaux authentifiés $CA_2$ et $CA_3$ qui sont également les canaux $CR_2$ et $CR_3$ servant à la réconciliation entre la station SC et satellite $S_2$ et entre la station SC et le satellite $S_3$ respectivement.

Le mode de réalisation de la figure 5C est compatible avec le mode de réalisation de la figure 5B. C'est-à-dire qu'il est possible dans l'invention d'avoir au moins un canal authentifié $CA_j$ qui est un canal de réconciliation, lui-même relayée par au moins un satellite de la constellation via au moins une liaison inter-satellite

## Revendications

1. Méthode de distribution de clés secrètes sûres pour une constellation (C) de $N > 1$ satellites $S_p, p = [1; N]$ à l'aide d'une station de communication (SC), ladite méthode comprenant les étapes suivantes :

   A. échanger au moins une clé secrète $K_{ij}$, $i, j \in [1; N]$, $i \neq j$, entre la station de communication (SC) et un satellite $S_i$ via un canal quantique ($CQ_{S1}$), chaque clé secrète $K_{ij}$ étant destinée à la communication sécurisée du satellite $S_i$ avec un satellite $S_j$ respectif de la constellation, ladite au moins une clé secrète $K_{ij}$ formant lesdites clés secrètes sures ;
   B. pour chaque j

      B1- échanger une clé secrète de chiffrage $KEK_j$, entre la station de communication (SC) et le satellite $S_j$ via un canal quantique ($CQ_{S2}$, $CQ_{S3}$) ;
      B2- chiffrer la clé secrète $K_{ij}$ par une méthode de chiffrement qui utilise la clé secrète de chiffrage $KEK_j$, de manière à produire un message crypté $KC_{ij}$ et transmettre ledit message crypté $KC_{ij}$ par un canal authentifié $CA_j$ de la station de communication

(SC) au satellite $S_j$.

2. Méthode selon la revendication précédente, ladite méthode comprenant une étape ultérieure C, consistant à :

C. déchiffrer, dans chaque satellite $S_j$, le message crypté $KC_{ij}$ à l'aide de la clé secrète de chiffrage $KEK_j$ associée au satellite $S_j$, de manière à obtenir la clé secrète $K_{ij}$ destinée à la communication sécurisée du satellite $S_i$ avec le satellite $S_j$ respectif.

3. Méthode selon la revendication 2, dans laquelle ladite méthode de chiffrement est la méthode du masque jetable et dans laquelle chaque clé secrète sûre, chaque clé secrète de chiffrage, et chaque message cryptés sont codées en binaire, la génération de chaque message crypté $KC_{ij}$ étant réalisée par la porte logique XOR combinant, la clé secrète de chiffrage $KEK_j$ et la clé secrète $K_{ij}$, le déchiffrement de chaque message crypté $KC_{ij}$ étant réalisé par la porte logique XOR combinant le message crypté $KC_{ij}$ et la secrète de chiffrage $KEK_j$.

4. Méthode selon l'une quelconque des revendications 2 à 3, comprenant une étape ultérieure D, consistant à chiffrer, dans le satellite $S_i$, un message non aléatoire (M) à l'aide d'une clé sécrète sûre $K_{ij}$ puis à transmettre le message non aléatoire chiffrée (MC) vers dans le satellite $S_j$, et comprenant une étape ultérieure E, consistant à déchiffrer ledit message non aléatoire chiffré à l'aide de la clé secrète sûre $K_{ij}$.

5. Méthode selon l'une quelconque des revendications 2 à 4, dans laquelle les étapes A, B2, et C sont répétées $z \in \mathbb{N} > 1$ fois avec un même $i \in [1; N]$, afin de former $z$ jeux de clé(s) secrète(s) sûre(s) $K_{ij,z}$, chacun destiné à sécuriser une communication du satellite $S_i$ avec la ou les satellites $S_j$.

6. Méthode selon la revendication précédente, dans laquelle $z$ est inférieur à un nombre dit critique calculé à partir d'une crypto-période des clés secrètes de chiffrage $KEK_j$.

7. Méthode selon l'une quelconque des revendications 2 à 4, dans laquelle les étapes A, B2, et C sont répétées $z \in \mathbb{N} > 1$ fois en variant $i$ à chaque itération tel que $i(z) \in [1; N]$, afin de former une pluralité de jeux de clé(s) secrète(s) sûre(s) $K_{i(z)j}$, chacun destiné à sécuriser une communication d'un satellite $S_{i(z)}$ avec la ou les satellites $S_j$.

8. Méthode selon l'une quelconque des revendications précédentes, dans laquelle l'étape A requiert une sous étape de réconciliation via un canal de réconciliation ($CR_1$) reliant ladite station de communication et le satellite $S_i$, et chaque étape B1 requiert une sous étape de réconciliation via un canal de réconciliation ($CR_2$, $CR_3$) reliant ladite station de communication et le satellite $S_j$ respectif.

9. Méthode selon la revendication précédente, dans lequel chaque canal de réconciliation est aussi une liaison bidirectionnelle de télémesure/télécommande du satellite respectivement relié par ce canal.

10. Méthode selon la revendication 8 ou 9, dans lequel au moins un canal de réconciliation ($CR_3$) est relayée par au moins un satellite ($S_{23}$) de la constellation via des liaisons inter-satellites ($LI_{23}$).

11. Méthode selon l'une quelconque des revendications 8 à 10, dans laquelle chaque canal authentifié $CA_j$ est un canal de réconciliation reliant ladite station de communication et le satellite $S_j$ respectif.

12. Méthode selon la revendication précédente, dans lequel chaque canal de réconciliation est aussi une liaison bidirectionnelle de télémesure/télécommande du satellite respectivement reliés par ce canal.

13. Station de communication (SC) de distribution de clés secrètes sûres pour une constellation (C) de $N > 1$ satellites $S_p, p = [1; N]$, ladite station de communication étant adaptée pour échanger au moins une clé secrète $K_{ij}$, $i, j \in [1; N]$, $i \neq j$ via un canal de quantique ($CQ_{S1}$) entre le satellite $S_i$ et ladite station de communication (SC), chaque clé secrète $K_{ij}$ étant destinée à la communication sécurisée du satellite $S_i$ avec un satellite $S_j$ respectif de la constellation, ladite au moins une clé secrète $K_{ij}, j \in [1; N]$, $i \neq j$ formant lesdites clés secrètes sures, ladite station de communication étant adaptée pour :
pour chaque j :

- échanger une clé secrète de chiffrage $KEK_j$ via un canal de cryptage ($CQ_{S2}$, $CQ_{S3}$) entre le satellite $S_j$ et ladite station de communication (SC);
- chiffrer la clé secrète $K_{ij}$ par une méthode de chiffrement qui utilise la clé secrète de chiffrage $KEK_j$, de manière à produire un message crypté $KC_{ij}$ et transmettre par un canal authentifié $CA_j$ de la station de communication (SC) au satellite $S_j$, ledit message crypté $KC_{ij}$.

14. Système (1) comprenant la station de communication selon la revendication précédente et comprenant les $N$ satellites, chaque satellite $S_j$ étant adapté pour déchiffrer, le message crypté $KC_{ij}$ à l'aide de la clé secrète de chiffrage $KEK_j$ associée au satellite $S_j$ de manière à obtenir dans le satellite $S_j$ la clé

secrète $K_{ij}$ destinée à la communication sécurisée du satellite $S_i$ avec le satellite $S_j$.

15. Système selon la revendication précédente, dans lequel ladite station de communication (SC) est embarquée sur un satellite additionnel en orbite autour de la terre, ledit satellite additionnel étant différent des satellites de la constellation (C).

16. Système selon la revendication précédente, dans lequel ledit satellite additionnel est sur une orbite dont une altitude est supérieure à celle d'une orbite des satellites de la constellation (C).

[Fig.1]

Fig.1

[Fig.2A]

Fig.2A

[Fig.2B]

Fig.2B

[Fig.2C]

Fig.2C

[Fig.3A]

soit $i \in [1; N], N > 2$

A | Echanger $K_{ij}, j \in [1; N], i \neq j$ via canal $CQ_{Si}$

Pour chaque $j$

B1 | Echanger $KEK_j$ via canal $CQ_{Sj}$

B2 | Produire $KC_{ij}$ avec $K_{ij}$ et $KEK_j$ et transmettre $KC_{ij}$ à $S_j$

B {

station SC

Fig.3A

[Fig.3B]

Fig.3B

[Fig.3C]

$$\text{soit } i \in [1; N], N > 2$$

A — Echanger $K_{ij}$, $j \in [1; N]$, i ≠ j via canal $CQ_{SI}$

Pour chaque $j$

B — B1 — Echanger $KEK_j$ via canal $CQ_{SJ}$

B2 — Produire $KC_{ij}$ avec $K_{ij}$ et $KEK_j$ et transmettre $KC_{ij}$ à $S_j$

station SC

C — Déchiffrer $KC_{ij}$ avec $KEK_j$

dans chaque satellite $S_j$,

## Fig.3C

[Fig.4]

soit $i \in [1; N], N > 2$

A | Echanger $K_{ij}, j \in [1; N], i \neq j$ via canal $CQ_{SJ}$

Pour chaque $j$

B1 | Echanger $KEK_j$ via canal $CQ_{SJ}$

B2 | Produire $KC_{ij}$ avec $K_{ij}$ et $KEK_j$ et transmettre $KC_{ij}$ à $S_j$

station SC

C | Déchiffrer $KC_{ij}$ avec $KEK_j$ — dans chaque satellite $S_j$,

D | Chiffrer message M avec $K_{ij}$ et transmettre message chiffré MC vers $S_j$ — dans satellite $S_i$

E | Déchiffrer $MC$ avec $K_{ij}$ — dans chaque satellite $S_j$

Fig.4

[Fig.5A]

Fig.5A

[Fig.5B]

Fig.5B

[Fig.5C]

Fig.5C

Europäisches
Patentamt

European
Patent Office

Office européen
des brevets

# RAPPORT DE RECHERCHE EUROPEENNE

Numéro de la demande

**EP 23 15 8344**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CARRASCO-CASADO ALBERTO ET AL: "QKD from a microsatellite: the SOTA experience", PROCEEDINGS OF SPIE; [PROCEEDINGS OF SPIE ISSN 0277-786X VOLUME 10524], SPIE, US, vol. 10660, 14 mai 2018 (2018-05-14), pages 106600B-106600B, XP060106703, DOI: 10.1117/12.2309624 ISBN: 978-1-5106-1533-5 * section 5; figure 12 * | 1-16 | INV. H04L9/08 |
| | ----- | | |
| X | WANG JUNYONG ET AL: "Modeling research of satellite-to-ground quantum key distribution constellations", ACTA ASTRONAUTICA, PERGAMON PRESS, ELMSFORD, GB, vol. 180, 1 janvier 2021 (2021-01-01), pages 470-481, XP086471399, ISSN: 0094-5765, DOI: 10.1016/J.ACTAASTRO.2020.12.039 [extrait le 2021-01-01] * section 2; figure 1 * | 1-16 | |
| | ----- | | **DOMAINES TECHNIQUES RECHERCHES (IPC)** |
| | | | H04L |

Le présent rapport a été établi pour toutes les revendications

| Lieu de la recherche | Date d'achèvement de la recherche | Examinateur |
|---|---|---|
| Munich | 30 juin 2023 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)